# EUROPEAN PATENT SPECIFICATION

(11) **EP 1 787 775 B1**
(45) Date of publication and mention of the grant of the patent: **06.11.2013**
(21) Application number: 06124009.9
(22) Date of filing: 14.11.2006
(51) Int. Cl.: B65G 47/54, B65G 47/82

(54) **Roller for laterally guiding a log onto a longitudinal conveyer**
Rolle zur seitlichen Führung eines Stammes auf einem Längsförderer
Rouleau pour guidage latéral d'une bille sur un convoyeur longitudinal

(30) Priority: 18.11.2005 FI 20051179
(43) Date of publication of application: 23.05.2007
(73) Proprietor: Tähkä OY, FIN-64260 Kaskinen (FI)
(72) Inventor: Metsänranta, Esko, FI-64260, Kaskinen (FI); Klockars, Bengt, FI-64300, Lapväärtti (FI); Rossi, Tapani, FI-64260, Kaskinen (FI)
(74) Representative: Berggren Oy Ab

(56) References cited:
- EP-A- 0 908 280
- CA-A1- 2 277 738
- JP-A- H05 124 725
- US-A- 3 844 399
- US-A- 4 078 592
- US-A- 4 373 563

## Description

The invention relates to a log conveyor structure according to the preamble of claim 1.

It is often necessary in log sawing lines to proceed from a crosswise passage of logs to a lengthwise conveyance thereof. In this transition process, the log is passed from top of a lateral conveyor onto the flights of a longitudinal conveyor. In the process of transition, the need to stop a crosswise moving log on top of the longitudinal conveyor as effectively as possible is a highly important aspect in terms of operation and the efficiency of a sawmill line. In the prior art, this has been effected by using rigid permanent stoppers along the far edge of a longitudinal conveyor to receive a log presently in crosswise motion and to stop it on top of the longitudinal conveyor.

Also prior art document US 3 844 399 presents a log conveyor having a plurality of roller tipped arms which resiliently bear against opposite sides of a log while guiding it. This machinery is used to move the log only in lengthwise direction.

Longitudinal conveyors are typically chain-driven mechanisms consisting of slide or roller flights, the chain being provided with flights at the intervals of about 0,2-0,8 meters. The crosswise motion of a log is brought to a halt on top of these lengthwise moving flights. Upon arriving from a lateral conveyor at a longitudinal conveyor, the log has a propensity to swing itself over the longitudinal conveyor's flights against the permanent and rigid stoppers and from there back towards the lateral conveyor. The log is set in an oscillating motion on top of the longitudinal conveyor. Thus, the flights of longitudinal conveyors are not at all or at least not sufficiently in contact with the log. This leads to trouble in terms of setting the log in motion in the longitudinal direction. Enhancement of the take-off has indeed been attempted by means of take-up rollers used for stopping the crosswise swing. These take-up rollers have been set in rotation around their axes for giving the log an enhanced take-off in the longitudinal direction.

Such a log conveyor structure is embodied by the features of the preamble of claim 1.

In the process of passing from crosswise to lengthwise conveyance, it is critically important to bring the logs as close to each other as possible on top of the longitudinal conveyor, the open space remaining between the logs being as small as possible. This enables a faster processing of logs in a sawmill, thus improving the sawmill in terms of productivity.

By means of an apparatus of the invention, the prior art problems can be eliminated and a crosswise moving log can be brought more quickly to a stop on top of the flights of a longitudinal conveyor, thus enhancing the production of a sawmill.

The invention is defined by the features of independent claim 1. Other preferred embodiments are defined by dependent claims 2-11.

The invention will now be described more specifically by ways of examples and drawings, in which
- fig. 1: shows a junction of lateral and longitudinal conveyors in a plan view,
- fig. 2: shows a junction of lateral and longitudinal conveyors in a side view, and
- fig. 3: shows a junction of lateral and longitudinal conveyors in a side view, according to a second embodiment of the invention.

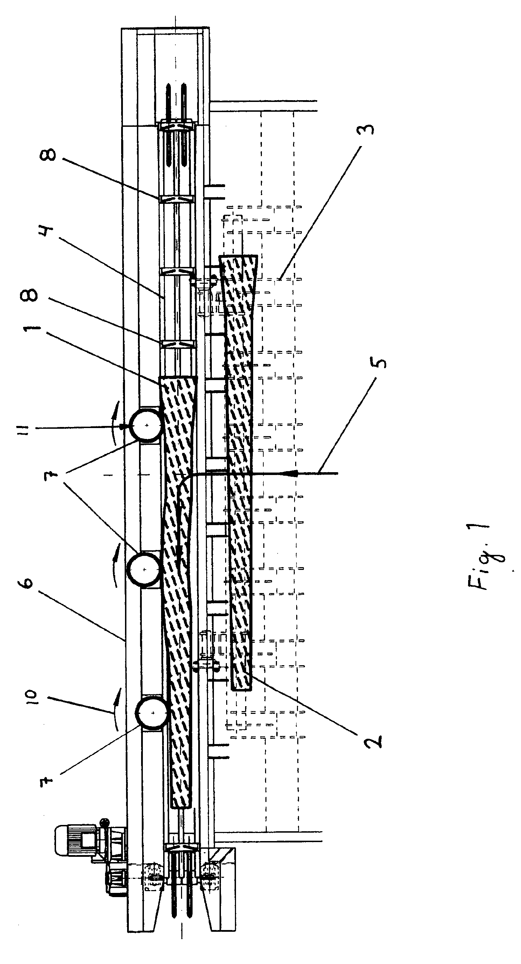

Fig. 1 shows in a plan view the passage of a first log 1 and a second log 2 from a lateral conveyor 3 onto a longitudinal conveyor 4, as indicated by an arrow 5. The longitudinal conveyor 4 for logs has its frame 6 fitted with take-up rollers 7 for stopping a crosswise moving log on top of the longitudinal conveyor's flights 8. The rollers 7 of such a take-up roller assembly operate each independently, whereby the take-up roller assembly as a whole establishes a better contact with the surface of the log 1. The first log 1 in fig. 1 is fully on top of the longitudinal conveyor 4 and the second log 2 is standing by at the end of the lateral conveyor 3 until the first log 1 has shifted forward in the longitudinal direction sufficiently for the second log 2 to be also placed on the longitudinal conveyor, as indicated by the arrow 5.

The prior art take-up rollers are permanently and rigidly attached to the longitudinal conveyor's 4 frame. A consequence of the rigid attachment is that the log 1 passed over from the lateral conveyor 3 onto the longitudinal conveyor 4 has a propensity to bounce back from the take-up roller assembly and to remain momentarily in oscillating motion on top of the longitudinal conveyor in a lateral direction. As a result of this, the longitudinal conveyor's 4 carrier flights 8 are not able to take hold of the log 1 but, instead, the longitudinal conveyor is slipping underneath the log and the log does not take off effectively forward along with the conveyor. This take-off of the log 1 has been attempted to be enhanced by a rotary motion of the take-up rollers 7 as indicated by arrows 10, as well as by a roughened surface 11 of the rollers.

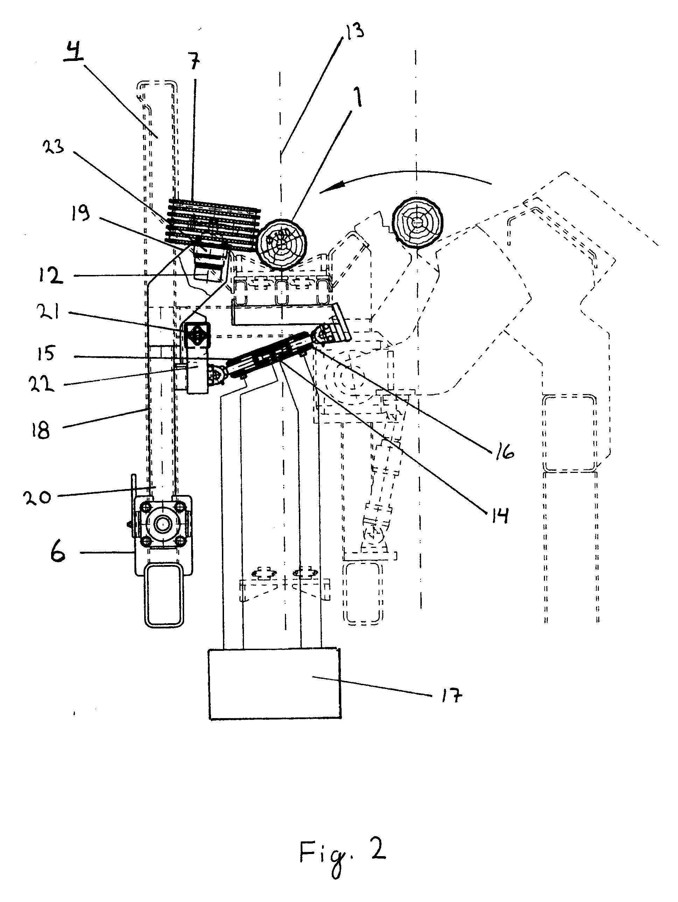

In the inventive solution, a drive shaft 12 of the take-up roller 7 has its attachment with respect to the longitudinal conveyor's 4 frame 6 or the like solid structure changed from rigid to flexible, as shown in fig. 2. Accordingly, the take-up rollers 7 conform better to the outer surface of logs and thereby have all the time a better contact with a log and provide effective assistance in its take-off. Since the logs 1 are always individuals in terms of contours, the flexible take-up rollers 7 ensure a better contact with the surface of logs in all shapes and sizes. An apparatus of the invention is capable of offsetting problems caused by various defects and anomalies in the logs 1, such as for example warpage or variations in girth. The ability to stop a crosswise motion of the log 1 more quickly on top of the longitudinal conveyor 4 means that the gaps between logs present on the longitudinal conveyor are automatically shortened. This increases the production efficiency of a sawmill without increasing the running speed of conveyors. The ability to carry more logs 1 without changing the speed of the longitudinal conveyor 4 entails also substantial savings in the conveyors' consumption of energy, because increasing the speed of a conveyor raises the conveyor's energy demand considerably.

Fig. 2 shows a first embodiment for the flexible take-up roller 7 of the invention, the entire take-up roller assembly consisting of such rollers. The number of such take-up rollers 7 in a take-up roller assembly is typically 2-5 specimens, but that number may understandably fluctuate according to demand. The take-up roller assembly is preset to match the girth of the presently processed logs 1 by adjusting a distance of the take-up roller assembly from a median plane 13 of the longitudinal conveyor 4. This adjustment is necessary, because the logs 1 of various size categories are handled in a sawmill and the effective treatment thereof calls for such adjustment. This adjustment is effected preferably by means of a special hydraulic cylinder 14. Such a special hydraulic cylinder 14 comprises two hydraulic cylinders 15 and 16 in a single housing. Each hydraulic cylinder 15 and 16 has preferably, but not absolutely necessarily, a different length, thus providing more optional positions for the take-up roller 7. Another alternative is to effect adjustment of the take-up roller's 7 position by using a feedback-fitted position cylinder, which only contains one cylinder. In this case, the cylinder enables stepless adjustment for the position of a take-up roller assembly. In either case, the hydraulic cylinder is regulated preferably by means of a separate control unit 17.

According to fig. 2, the take-up roller 7 is mounted on a first end 19 of an arm 18 and a second end 20 of the arm is pivotably attached to the longitudinal conveyor 4 or the like solid structure. A presetting of the take-up roller 7 is effected by adjusting the cylinders 15 and 16 of the hydraulic cylinder 14, such that the distance of the take-up roller is adapted to the girth of the presently processed logs 1. The adjustment is effected by adding or removing hydraulic fluid to or from the cylinder or cylinders 15 and 16. The special hydraulic cylinder 14 is attached by its first end to a frame 6 of the longitudinal conveyor 4 or the like solid structure and by its second end to a moment arm 22 of an elastic element 21. Such an elastic element 21 can be a coil spring, a torque arm or the like, such as for example a so-called rosta element. The elastic element 21 is in turn attached to the arm 18 of a take-up roller. On the other hand, the elastic element 21 can be installed directly between the special hydraulic cylinder 14 and the take-up roller's arm 18 without a separate moment arm. The attachment can be optionally implemented also to an extension of the take-up roller's arm 18, whereby, if necessary, the attachment and the hydraulic cylinder 14 can be shifted anywhere in the vicinity of the arm's articulation. Such option may become necessary, for example due to a change in space demand in the vicinity of the longitudinal conveyor 4.

The elastic element 21 enables the take-up roller 7 to proceed in contact with an uneven surface of the log 1. In the event that the elastic element 21 has its elasticity range exhausted as a result of a powerful impact or the like, the hydraulic cylinders 15 and 16 are provided with a relief valve for discharging a resulting pressure peak from the cylinders. As soon as the pressure peak has been discharged, a normal pressure of the cylinders 15 and 16 is restored under the regulation of the control unit 17. The control unit 17 may comprise any prior art control unit intended for hydraulic cylinders. By virtue of the elastic element 21, the take-up roller assembly is enabled to follow smoothly the log's 1 surface and the breakdowns of rollers caused by possible shocks applied to the rollers 7 can be avoided as the roller has an ability to yield when necessary.

A rotating motion of the take-up roller 7 is provided by a hydraulic motor, an electric motor or the like drive motor 23. The take-up roller 7 has its rotation speed preferably in line with the speed of the longitudinal conveyor 4, such that the take-up rollers would have an effect as favourable as possible in terms of setting the log 1 in motion. The take-up roller 7 is preferably in a direct engagement with the drive motor 23 and the drive motor is mounted on the take-up roller's articulated arm 18. A second option is that the take-up roller 7 be bearing-mounted on the roller's drive shaft 12 and the roller be operated by means of a separate drive motor. In this case, transmissions can be preferably obtained by using for example a tooth system, a belt, a chain or the like. In either case, the drive motor 23 can be installed either above or below the take-up roller 7. Rotating the rollers 7 by means of the drive motor 23 is not absolutely necessary but, instead, the rollers can also be bearing-mounted for idle running.

In the embodiment of fig. 2, the take-up roller assembly is adapted to receive logs 1 of the smallest size category, whereby both hydraulic cylinders 15 and 16 are in a retracted position.

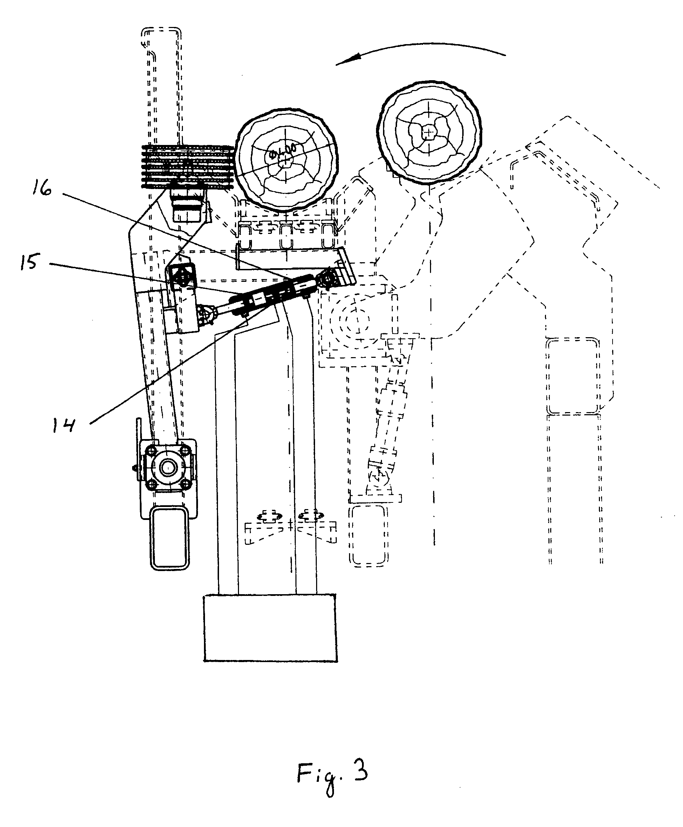

Fig. 3 shows a second preferred embodiment, wherein the longer-stroke cylinder 15 is in an extended position and the shorter-stroke cylinder 16 is in a retracted position. This enables handling logs of the second largest size category by using the special hydraulic cylinder 14.

## Claims

1. A log conveyor structure comprising a take-up roller (7), a log conveyor (4) for a lengthwise motion of a log, a log conveyor (3) for a crosswise motion of said log, said roller (7) converting the crosswise motion of said log into its lengthwise motion, said take-up roller (7) being mounted on a first end (19) of an arm (18) and a second end (20) of the arm (18) being attached to a frame (6) of a log conveyor (4) or the like rigid structure, **characterized in that** the attachment of the second end (20) of said arm (18) to the log conveyor's (4) frame (6) or the like rigid structure is articulated and a distance of the take-up roller (7) from a median plane (13) of the log conveyor (4) is determined by the position of a hydraulic cylinder (14), said hydraulic cylinder (14) being secured by its first end to the log conveyor's (4) frame (6) or the like rigid structure and by its second end to an elastic element (21), said elastic element (21) being attached to the arm (18) of the take-up roller or to an extension of the arm.

2. A log conveyor structure as set forth in claim 1, **characterized in that** the hydraulic cylinder (14) is a special hydraulic cylinder, wherein a single housing contains two cylinders (15, 16).

3. A log conveyor structure as set forth in claim 1, **characterized in that** the hydraulic cylinder (14) is a position cylinder.

4. A log conveyor structure as set forth in claim 3, **characterized in that** the position cylinder is provided with a feedback.

5. A log conveyor structure as set forth in claim 1, **characterized in that** the elastic element (21) is a coil spring, a torque arm or the like, such as for example a socalled rosta element.

6. A log conveyor structure as set forth in claim 1, **characterized in that** the take-up roller (7) is operated by means of a drive motor (23).

7. A log conveyor structure as set forth in claim 6, **characterized in that** the take-up roller (7) is in a direct engagement with the drive motor (23).

8. A log conveyor structure as set forth in claim 6, **characterized in that** the take-up roller (7) is bearing-mounted and the take-up roller (7) is driven by way of a chain, a belt, tooth systems or the like.

9. A log conveyor structure as set forth in claim 6, **characterized in that** the drive motor (23) is a hydraulic motor, an electric motor or the like.

10. A log conveyor structure as set forth in claim 6, **characterized in that** the drive motor (23) for the take-up roller (7) has its rotation speed synchronized with the speed of the log conveyor (4).

11. A log conveyor structure as set forth in any of claims 1 to 10, **characterized in that** the log conveyor structure comprises a take-up roller assembly having two or more take-up rollers (7).

## Patentansprüche

1. Stammfördereraufbau, umfassend eine Aufnahmerolle (7), einen Stammförderer (4) für eine Längsbewegung eines Stamms, und einen Stammförderer (3) für eine Querbewegung des Stamms, wobei die Rolle (7) die Querbewegung des Stamms in seine Längsbewegung umwandelt, wobei die Aufnahmerolle (7) an einem ersten Ende (19) eines Arms (18) angebracht ist und ein zweites Ende (20) des Arms (18) an einem Rahmen (6) eines Stammförderers (4) oder einem ähnlichen starren Aufbau angebracht ist, **dadurch gekennzeichnet, dass** die Anbringung des zweiten Endes (20) des Arms (18) an dem Rahmen (6) des Förderers (4) oder dem ähnlichen starren Aufbau gelenkig ist und ein Abstand der Aufnahmerolle (7) von einer Medianebene (13) des Stammförderers (4) durch die Position eines Hydraulikzylinders (14) bestimmt ist, wobei der Hydraulikzylinder (14) durch sein erstes Ende an dem Rahmen (6) des Stammförderers (4) oder dem ähnlichen starren Aufbau befestigt ist und durch sein zweites Ende an einem elastischen Element (21) befestigt ist, wobei das elastische Element (21) an dem Arm (18) der Aufnahmerolle oder an einer Verlängerung des Arms angebracht ist.

2. Stammförderaufbau nach Anspruch 1, **dadurch gekennzeichnet, dass** der Hydraulikzylinder (14) ein besonderer Hydraulikzylinder ist, wobei ein einzelnes Gehäuse zwei Zylinder (15, 16) enthält.

3. Stammförderaufbau nach Anspruch 1, **dadurch gekennzeichnet, dass** der Hydraulikzylinder (14) ein Stellungszylinder ist.

4. Stammförderaufbau nach Anspruch 3, **dadurch gekennzeichnet, dass** der Stellungszylinder mit einer Rückkopplung versehen ist.

5. Stammförderaufbau nach Anspruch 1, **dadurch gekennzeichnet, dass** das elastische Element (21) eine Spiralfeder, eine Drehmomentstütze oder dergleichen wie etwa ein sogenanntes ROSTA-Element ist.

6. Stammförderaufbau nach Anspruch 1, **dadurch gekennzeichnet, dass** die Aufnahmerolle (7) durch einen Antriebsmotor (23) betätigt wird.

7. Stammförderaufbau nach Anspruch 6, **dadurch gekennzeichnet, dass** die Aufnahmerolle (7) in einem direkten Eingriff mit dem Antriebsmotor (23) steht.

8. Stammförderaufbau nach Anspruch 6, **dadurch gekennzeichnet, dass** die Aufnahmerolle (7) gelagert angebracht ist und die Aufnahmerolle (7) durch eine Kette, einen Riemen, Zahnsysteme oder dergleichen angetrieben wird.

9. Stammförderaufbau nach Anspruch 6, **dadurch gekennzeichnet, dass** der Antriebsmotor (23) ein Hydraulikmotor, ein Elektromotor oder dergleichen ist.

10. Stammförderaufbau nach Anspruch 6, **dadurch gekennzeichnet, dass** die Umdrehungsgeschwindigkeit des Antriebsmotors (23) für die Aufnahmerolle (7) mit der Geschwindigkeit des Stammförderers (4) synchronisiert ist.

11. Stammförderaufbau nach einem der Ansprüche 1 bis 10, **dadurch gekennzeichnet, dass** der Stammfördereraufbau einen Aufnahmerollenaufbau mit zwei oder mehr Aufnahmerollen (7) umfasst.

## Revendications

1. Structure de convoyeur de bille comprenant un rouleau entraîneur (7), un convoyeur de bille (4) pour un mouvement longitudinal de la bille, un convoyeur de bille (3) pour un mouvement transversal de ladite bille, ledit rouleau (7) convertissant le mouvement transversal de ladite bille dans son mouvement longitudinal, le rouleau entraîneur (7) étant monté sur une première extrémité (19) d'un bras (18) et une seconde extrémité (20) du bras (18) étant fixée sur un cadre (6) d'un convoyeur de bille (4) ou une structure rigide similaire, **caractérisée en ce que** la fixation de la seconde extrémité (20) du bras (18) au cadre (6) du convoyeur de bille (4) ou à la structure rigide similaire est articulée et une distance du rouleau entraîneur (7) depuis un plan médian (13) du convoyeur de bille (4) est déterminée par la position d'un vérin hydraulique (14), le vérin hydraulique (14) étant fixé au cadre (6) du convoyeur de bille (4) ou à la structure rigide similaire par sa première extrémité et à un élément élastique (21) par sa seconde extrémité, l'élément élastique (21) étant fixé au bras (18) du rouleau entraîneur ou à une extension du bras.

2. Structure de convoyeur de bille selon la revendication 1, **caractérisée en ce que** le vérin hydraulique (14) est un vérin hydraulique spécial, dans lequel un logement unique contient deux vérins (15, 16).

3. Structure de convoyeur de bille selon la revendication 1, **caractérisée en ce que** le vérin hydraulique (14) est un vérin à position.

4. Structure de convoyeur de bille selon la revendication 3, **caractérisée en ce que** le vérin à position est doté d'un retour.

5. Structure de convoyeur de bille selon la revendication 1, **caractérisée en ce que** l'élément élastique (21) est un ressort hélicoïdal, un bras de couple ou similaire, par exemple ce que l'on appelle un élément rosta.

6. Structure de convoyeur de bille selon la revendication 1, **caractérisée en ce que** le rouleau entraîneur (7) fonctionne via un moteur d'entraînement (23).

7. Structure de convoyeur de bille selon la revendication 6, **caractérisée en ce que** le rouleau entraîneur (7) est en engagement direct avec le moteur d'entraînement (23).

8. Structure de convoyeur de bille selon la revendication 6, **caractérisée en ce que** le rouleau entraîneur (7) est monté sur palier et le rouleau entraîneur (7) est entraîné par une chaîne, une courroie, un système de dents ou similaire.

9. Structure de convoyeur de bille selon la revendication 6, **caractérisée en ce que** le moteur d'entraînement (23) est un moteur hydraulique, un moteur électrique ou similaire.

10. Structure de convoyeur de bille selon la revendication 6, **caractérisée en ce que** le moteur d'entraînement (23) pour le rouleau entraîneur (7) a sa vitesse de rotation synchronisée avec la vitesse du convoyeur de bille (4).

11. Structure de convoyeur de bille selon l'une quelconque des revendications 1 à 10, **caractérisée en ce que** la structure de convoyeur de bille comprend un montage de rouleau entraîneur présentant deux rouleaux entraîneurs (7) ou plus.
